# FASCICULE DE BREVET EUROPEEN

(11) **EP 4 077 883 B1**
(45) Date de publication et mention de la délivrance du brevet: **11.09.2024**
(21) Numéro de dépôt: 20845198.9
(22) Date de dépôt: 14.12.2020
(51) Int. Cl.: F01D 5/14, F01D 5/28, F04D 29/02, F04D 29/32

(54) **AUBE EN MATERIAU COMPOSITE AVEC BORD D'ATTAQUE RAPPORTE A DENSITE VARIABLE**
SCHAUFEL AUS VERBUNDWERKSTOFF MIT BEFESTIGTER EINTRITTSKANTE MIT VARIABLER DICHTE
BLADE MADE OF COMPOSITE MATERIAL WITH VARIABLE-DENSITY ATTACHED LEADING EDGE

(30) Priorité: 18.12.2019 FR 1914746
(43) Date de publication de la demande: 26.10.2022
(73) Titulaire: SAFRAN AIRCRAFT ENGINES, 75015 Paris (FR)
(72) Inventeur: GONDRE, Guillaume, Pascal, Jean-Charles, 77550 MOISSY-CRAMAYEL (FR); BAZOT, Olivier, 77550 MOISSY-CRAMAYEL (FR); DUBOSC, Matthieu, Pierre, Michel, 77550 MOISSY-CRAMAYEL (FR)
(74) Mandataire: Cabinet Beau de Loménie
(86) Numéro de dépôt international: PCT/FR2020/052432
(87) Numéro de publication internationale: WO 2021/123594

(56) Documents cités:
- EP-A1- 2 037 082
- EP-A2- 2 405 101
- WO-A1-2017/055727
- FR-A1- 2 684 719
- FR-A1- 2 994 708
- US-A1- 2016 177 744
- US-A1- 2019 242 260

## Description

### Domaine Technique

La présente invention se rapporte au domaine général de la fabrication d'aubes pour moteur aéronautique à turbine à gaz en matériau composite comprenant un bord d'attaque métallique.

### Technique antérieure

La présence d'un bord d'attaque métallique sur une aube de moteur aéronautique à turbine à gaz réalisée en matériau composite permet de protéger l'aubage composite lors de l'impact avec un corps étranger comme un oiseau. Ceci est notamment le cas pour les aubes mobiles de soufflante d'une turbomachine aéronautique qui sont exposées à l'ingestion d'un oiseau, de grêle, de glace, etc.

La fabrication d'une telle aube comprend tout d'abord la réalisation d'une « aube nue » en matériau composite comprenant un renfort fibreux densifié par une matrice obtenue généralement à partir d'une résine thermodurcissable (TD) ou thermoplastique (TP).

Une fois l'aube nue en matériau composite obtenue, il est alors nécessaire d'assembler sur son bord avant un bord d'attaque métallique de protection. A cet effet, le clinquant métallique, qui est réalisé par des procédés mécaniques tels que l'estampage, le formage ou l'électroformage par exemple, est collé sur le bord avant de l'aube en matériau composite. Cette opération peut être réalisée dans un moule assurant le collage du clinquant métallique. Des exemples d'aubes en matériau composite munies d'un bord d'attaque métallique ou composite sont notamment décrits dans les documents US 2007/092379, US 2016/0167269, US 2016/0177744 et FR 2 994 708.

Les bords d'attaque rapportés sont généralement réalisés en titane pour des raisons de maîtrise de la masse. Si le titane présente une bonne résistance mécanique, l'impact à haute vitesse d'un corps étranger, en particulier un oiseau, sur un bord d'attaque en titane entraîne tout de même une déformation (pliure) de celui-ci. Une solution peut consister à augmenter la raideur du bord d'attaque en augmentant l'épaisseur de celui-ci ou en utilisant un matériau plus dense. Cependant, dans ce cas, on augmente significativement la masse globale du bord d'attaque et, par conséquent, l'effort centrifuge subi par le matériau composite de l'aube en particulier au niveau de l'échasse qui est une zone critique de l'aube en statique.

### Exposé de l'invention

La présente invention a donc pour but principal de proposer un procédé de fabrication d'une aube en matériau composite munie d'un bord d'attaque métallique qui ne présente pas les inconvénients précités.

Conformément à l'invention, ce but est atteint grâce à un procédé de fabrication d'une aube en matériau composite à bord d'attaque métallique rapporté pour moteur aéronautique à turbine à gaz, le procédé comprenant :
- réalisation d'une aube nue en matériau composite comprenant suivant une direction longitudinale une partie de pied d'aube, une partie d'échasse et une partie de corps de pale, la partie de corps de pale s'étendant suivant la direction longitudinale entre la partie d'échasse et un sommet de corps de pale et suivant une direction s'étendant entre une portion de bord avant et une portion de bord arrière,
- fabrication par fabrication additive d'un bord d'attaque en s'étendant suivant une direction longitudinale entre une extrémité inférieure destinée à être présente au niveau de la partie d'échasse de l'aube nue en matériau composite et une extrémité supérieure destinée à être présente au niveau du sommet de la partie de corps de pale,
- collage du bord d'attaque fabriqué sur la portion de bord avant du corps de pale de l'aube nue en matériau composite,
caractérisé en ce que le bord d'attaque comprend une première portion réalisée en un premier matériau métallique et s'étendant depuis l'extrémité inférieure du bord d'attaque et jusqu'à une position intermédiaire située entre l'extrémité inférieure et l'extrémité supérieure du bord d'attaque et une deuxième portion réalisée en un deuxième matériau métallique et s'étendant depuis la position intermédiaire et jusqu'à l'extrémité supérieure dudit bord d'attaque, le deuxième matériau métallique présentant une densité supérieure à la densité du premier matériau métallique.

On obtient ainsi une aube en matériau composite muni d'un bord d'attaque présentant une densité variable, le bord d'attaque présentant la plus forte densité et, par conséquent, la plus grande raideur, dans la partie supérieure de l'aube correspondant à la partie de l'aube la plus sensible à l'impact avec un corps étrangers. Le bord d'attaque présente une densité plus faible dans la partie inférieure de l'aube qui est peu exposée et/ou moins sensible à l'impact avec des corps étranger. L'aube ainsi obtenue présente une très bonne tenue à l'impact dans la zone à renforcer vis-à-vis de l'ingestion de corps étrangers sans pénaliser significativement la masse globale de l'aube grâce à la présence d'une portion de plus faible densité. On évite ainsi en outre d'augmenter les contraintes statiques générées par l'effort centrifuge au niveau de l'échasse qui correspond à une zone de concentration d'efforts dans la structure d'aube en matériau composite.

Selon une caractéristique particulière du procédé de l'invention, la première portion s'étend suivant la direction longitudinale sur une hauteur correspondant à 30% de la hauteur totale de veine tandis que la deuxième portion s'étend suivant la direction longitudinale sur une hauteur correspondant à 70% de la hauteur totale de veine. Selon une autre caractéristique particulière du procédé de l'invention, le premier matériau est de l'acier ou du titane tandis que le deuxième matériau est un alliage à base de nickel ou cobalt.

Selon une autre caractéristique particulière du procédé de l'invention, le premier matériau est du titane tandis que le deuxième matériau est de l'acier.

L'invention concerne également un procédé de fabrication d'une aube en matériau composite à bord d'attaque métallique rapporté pour moteur aéronautique à turbine à gaz, le procédé comprenant :
- réalisation d'une aube nue en matériau composite comprenant suivant une direction longitudinale une partie de pied d'aube, une partie d'échasse et une partie de corps de pale, la partie de corps de pale s'étendant suivant la direction longitudinale entre la partie d'échasse et un sommet de corps de pale et suivant une direction s'étendant entre une portion de bord avant et une portion de bord arrière,
- fabrication par fabrication additive d'un bord d'attaque s'étendant suivant une direction longitudinale entre une extrémité inférieure destinée à être présente au niveau de la partie d'échasse de l'aube nue en matériau composite et une extrémité supérieure destinée à être présente au niveau du sommet de la partie de corps de pale,
- collage du bord d'attaque fabriqué sur la portion de bord avant du corps de pale de l'aube nue en matériau composite,
caractérisé en ce que le bord d'attaque comprend une première portion réalisée en un premier matériau métallique et s'étendant depuis l'extrémité inférieure du bord d'attaque et jusqu'à une première position intermédiaire située entre l'extrémité inférieure et l'extrémité supérieure du bord d'attaque, une deuxième portion réalisée en un deuxième matériau métallique et s'étendant depuis la première position intermédiaire et jusqu'à une deuxième position intermédiaire, et une troisième portion réalisée en un troisième matériau métallique et s'étendant depuis la deuxième position intermédiaire et jusqu'à l'extrémité supérieure dudit bord d'attaque, le deuxième matériau métallique présentant une densité supérieure à la densité des premier et troisième matériaux métalliques.

On obtient ainsi une aube en matériau composite muni d'un bord d'attaque présentant une densité variable, le bord d'attaque présentant la plus forte densité et, par conséquent, la plus grande raideur, dans la partie supérieure de l'aube correspondant à la partie de l'aube la plus sensible à l'impact avec un corps étrangers. Le bord d'attaque présente une densité plus faible dans la partie inférieure de l'aube qui est peu exposée et/ou moins sensible à l'impact avec des corps étranger. L'aube ainsi obtenue présente une très bonne tenue à l'impact dans la zone à renforcer vis-à-vis de l'ingestion de corps étrangers sans pénaliser significativement la masse globale de l'aube grâce à la présence de deux portions de plus faible densité. On évite ainsi en outre d'augmenter les contraintes statiques générées par l'effort centrifuge notamment au niveau de l'échasse qui correspond à une zone de concentration d'efforts dans la structure d'aube en matériau composite.

Selon une caractéristique particulière du procédé de l'invention, la première portion s'étend suivant la direction longitudinale sur une hauteur correspondant à 30% de la hauteur totale de veine tandis que la deuxième portion s'étend suivant la direction longitudinale sur une hauteur correspondant à 60% de la hauteur totale de veine et la troisième portion s'étend suivant la direction longitudinale sur une hauteur correspondant à 10% de la hauteur totale de veine.

Selon une autre caractéristique particulière du procédé de l'invention, les premier et troisième matériaux métalliques sont de l'acier ou du titane tandis que le deuxième matériau métallique est un alliage à base de nickel ou cobalt.

Selon une autre caractéristique particulière du procédé de l'invention, les premier et troisième matériaux métalliques sont du titane tandis que le deuxième matériau métallique est de l'acier.

L'invention a également pour objet une aube en matériau composite à bord d'attaque métallique rapporté pour moteur aéronautique à turbine à gaz, l'aube comprenant une structure d'aube en matériau composite comprenant suivant une direction longitudinale un pied d'aube, une échasse et un corps de pale, le corps de pale s'étendant suivant la direction longitudinale entre l'échasse et un sommet d'aube et suivant une direction s'étendant entre une portion de bord avant et un bord arrière, et un bord d'attaque collé sur la portion de bord avant du corps de pale de la structure d'aube en matériau composite, le bord d'attaque s'étendant suivant une direction longitudinale entre une extrémité inférieure présente au niveau de l'échasse de la structure d'aube en matériau composite et une extrémité supérieure présente au niveau du sommet d'aube de ladite structure d'aube, caractérisé en ce que le bord d'attaque comprend une première portion réalisée en un premier matériau métallique et s'étendant depuis l'extrémité inférieure du bord d'attaque et jusqu'à une position intermédiaire située entre l'extrémité inférieure et l'extrémité supérieure du bord d'attaque et une deuxième portion réalisée en un deuxième matériau métallique et s'étendant depuis la position intermédiaire et jusqu'à l'extrémité supérieure dudit bord d'attaque, le deuxième matériau métallique présentant une densité supérieure à la densité du premier matériau métallique. L'aube de l'invention comporte ainsi un bord d'attaque présentant une densité variable avec la plus forte densité et, par conséquent, la plus grande raideur, dans la partie supérieure de l'aube correspondant à la partie de l'aube la plus sensible à l'impact avec un corps étranger. Le bord d'attaque présente une densité plus faible dans la partie inférieure de l'aube qui est peu exposée et/ou moins sensible à l'impact avec des corps étrangers. L'aube ainsi obtenue présente une très bonne tenue à l'impact dans la zone à renforcer vis-à-vis de l'ingestion de corps étrangers sans pénaliser significativement la masse globale de l'aube grâce à la présence d'une portion de plus faible densité. On évite ainsi en outre d'augmenter les contraintes statiques générées par l'effort centrifuge au niveau de l'échasse qui correspond à une zone de concentration d'efforts dans la structure d'aube en matériau composite.

Selon une caractéristique particulière de l'aube de l'invention, la première portion s'étend suivant la direction longitudinale sur une hauteur correspondant à 30% de la hauteur totale de veine tandis que la deuxième portion s'étend suivant la direction longitudinale sur une hauteur correspondant à 70% de la hauteur totale de veine. L'invention a encore pour objet une aube en matériau composite à bord d'attaque métallique rapporté pour moteur aéronautique à turbine à gaz, l'aube comprenant une structure d'aube en matériau composite comprenant suivant une direction longitudinale un pied d'aube, une échasse et un corps de pale, le corps de pale s'étendant suivant la direction longitudinale entre l'échasse et un sommet d'aube et suivant une direction s'étendant entre une portion de bord avant et un bord arrière, et un bord d'attaque collé sur la portion de bord avant du corps de pale de la structure d'aube en matériau composite, le bord d'attaque s'étendant suivant une direction longitudinale entre une extrémité inférieure présente au niveau de l'échasse de la structure d'aube en matériau composite et une extrémité supérieure présente au niveau du sommet d'aube de ladite structure d'aube, caractérisé en ce que le bord d'attaque comprend une première portion réalisée en un premier matériau métallique et s'étendant depuis l'extrémité inférieure du bord d'attaque et jusqu'à une première position intermédiaire située entre l'extrémité inférieure et l'extrémité supérieure du bord d'attaque, une deuxième portion réalisée en un deuxième matériau métallique et s'étendant depuis la première position intermédiaire et jusqu'à une deuxième position intermédiaire, et une troisième portion réalisée en un troisième matériau métallique et s'étendant depuis la deuxième position intermédiaire et jusqu'à l'extrémité supérieure dudit bord d'attaque, le deuxième matériau métallique présentant une densité supérieure à la densité des premier et troisième matériaux métalliques.

L'aube de l'invention comporte ainsi un bord d'attaque présentant une densité variable avec la plus forte densité et, par conséquent, la plus grande raideur, dans la partie supérieure de l'aube correspondant à la partie de l'aube la plus sensible à l'impact avec un corps étranger. Le bord d'attaque présente une densité plus faible dans la partie inférieure de l'aube qui est peu exposée et/ou moins sensible à l'impact avec des corps étrangers. L'aube ainsi présente une très bonne tenue à l'impact dans la zone à renforcer vis-à-vis de l'ingestion de corps étrangers sans pénaliser significativement la masse globale de l'aube grâce à la présence de deux portions de plus faible densité. On évite ainsi en outre d'augmenter les contraintes statiques générées par l'effort centrifuge notamment au niveau de l'échasse qui correspond à une zone de concentration d'efforts dans la structure d'aube en matériau composite.

### Brève description des dessins

[Fig. 1] La figure 1 est une vue schématique en perspective d'une aube en matériau composite munie d'un bord d'attaque métallique rapporté conformément à un mode de réalisation de l'invention,
[Fig. 2] La figure 2 est une vue schématique en perspective éclatée montrant l'assemblage d'un bord d'attaque métallique sur une aube nue en matériau composite,
[Fig. 3] La figure 3 est une vue schématique en perspective d'une aube en matériau composite munie d'un bord d'attaque métallique rapporté conformément à un autre mode de réalisation de l'invention.

### Description des modes de réalisation

L'invention s'applique à la réalisation d'aubes en matériau composite pour moteur aéronautique à turbine à gaz ayant un bord d'attaque métallique.

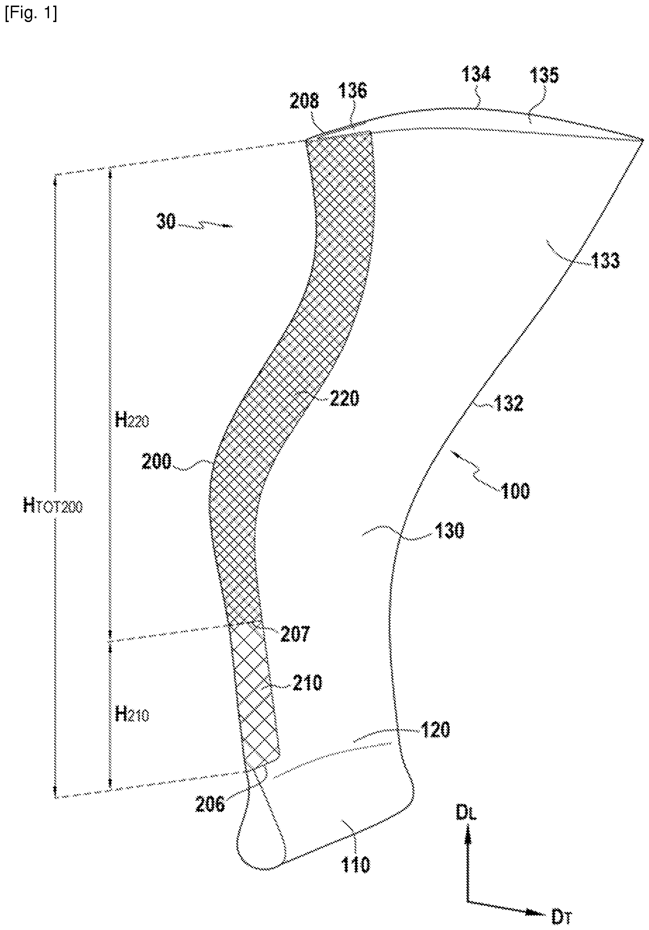

Un procédé conforme à l'invention va être décrit en relation avec la fabrication d'une aube de soufflante telle que l'aube 30 illustrée sur la figure 1 qui comprend une structure d'aube en matériau composite 100 comprenant suivant une direction longitudinale D_{L} un pied d'aube 110, une échasse 120 et un corps de pale 130 s'étendant suivant une direction transversale D_{T} entre un bord d'attaque 200 et un bord de fuite 132. Le corps de pale 130 comporte également une face intrados 133 et une face extrados 134 et un sommet 135. Le bord d'attaque 200 est constitué d'un clinquant en matériau métallique collé sur une portion de bord avant 136 du corps de pale 130. A l'exception du bord d'attaque 200, l'aube 30 est en matériau composite.

Le procédé de fabrication de l'aube débute par la réalisation d'une aube nue en matériau composite obtenue à partir d'un renfort fibreux densifié par une matrice. Par « aube nue », on entend ici un corps d'aube entièrement en matériau composite comprenant la plupart des parties constitutives de l'aube finale, à savoir le pied d'aube, l'échasse et le corps de pale tels que décrits ci-avant, à l'exception du bord d'attaque qui est constitué par un clinquant métallique rapporté sur l'aube nue comme décrit en détails ci-après.

L'aube nue est fabriquée à partir d'une préforme fibreuse pouvant être obtenue de différentes façons connues de l'homme du métier. Typiquement, la préforme peut être obtenue directement par tissage tridimensionnel (3D) de fils (formés par exemple de fibres de carbone) ou par drapage de tissus fibreux bidimensionnels. La fabrication d'une aube de soufflante en matériau composite obtenue à partir d'un renfort fibreux réalisé par tissage tridimensionnel et densifié par une matrice est notamment décrite dans le document US 2005/084377. Dans l'exemple décrit ici, la préforme d'aube de soufflante est obtenue par tissage 3D de fils en fibres de carbone.

De façon connue, la préforme d'aube est ensuite imprégnée avec une composition liquide contenant un précurseur du matériau de la matrice. Le précurseur se présente habituellement sous forme d'un polymère, tel qu'une résine, éventuellement dilué dans un solvant. La préforme est placée dans un moule pouvant être fermé de manière étanche avec un logement ayant la forme de l'aube nue moulée et pouvant notamment présenter une forme vrillée correspondant à la forme définitive du corps de pale à profil aérodynamique. Ensuite, on referme le moule et on injecte le précurseur liquide de matrice, par exemple une résine époxyde, dans tout le logement pour imprégner toute la partie fibreuse de la préforme. L'imprégnation de la préforme fibreuse d'aube peut être notamment réalisée par le procédé bien connu de moulage par transfert dit RTM ("Resin Transfert Moulding")

La transformation du précurseur en matrice, par exemple par polymérisation, est réalisée par traitement thermique, généralement par chauffage du moule, après élimination du solvant éventuel et réticulation du polymère, la préforme étant toujours maintenue dans le moule ayant une forme correspondant à celle de la structure à profil aérodynamique. La matrice peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

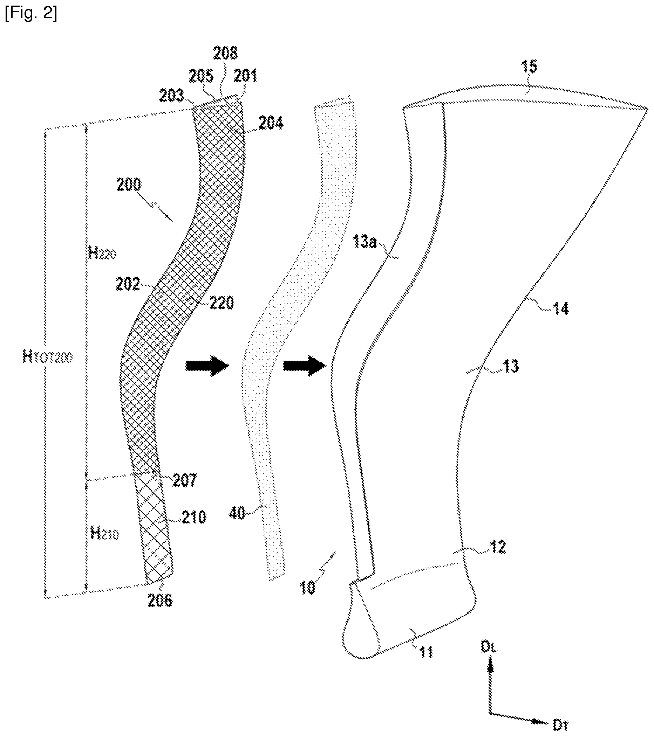

Après la formation de la matrice, la pièce est démoulée. Au final, la pièce est détourée pour enlever l'excès de résine et les chanfreins sont usinés. Aucun autre usinage n'est nécessaire puisque, la pièce étant moulée, elle respecte les cotes exigées. On obtient alors une aube nue 10 qui comporte, comme illustrée sur la figure 2, une partie de pied d'aube 11, correspondant au pied d'aube 110 de la structure d'aube 100 de l'aube 30 décrite ci-avant, une partie d'échasse 12 correspondant à l'échasse 120 de la structure d'aube 100 de l'aube 30 et une partie de corps de pale 13 correspondant au corps de pale 130 de la structure d'aube 100 de l'aube 30, la partie de corps de pale s'étendant entre la partie de d'échasse 12 et un sommet de corps de pale 15 (correspondant au sommet 135 du corps de pale 130 de la structure d'aube 100 de l'aube 30). La partie de corps de pale 13 comporte une portion de bord avant 13a correspondant à la portion de bord avant 136 du corps de pale 130 de la structure d'aube 100 de l'aube 30. La portion de bord avant 13a est destinée à recevoir un clinquant métallique afin de former le bord d'attaque de l'aube finale.

Ultérieurement ou parallèlement à la réalisation de l'aube nue, un bord d'attaque brut (clinquant) à la forme et aux dimensions définies dans un modèle numérique théorique de bord d'attaque est alors réalisé par fabrication additive. Parmi les procédés connus de fabrication additive, les procédés suivants peuvent notamment être utilisés pour réaliser le bord d'attaque :
- procédé de fabrication additive métallique par couches qui lie les particules par fusion à l'aide d'une source laser, encore appelé fabrication additive sur lit de poudre ou SLM (pour « Sélective Laser Melting ») ou LBM (pour « Laser Beam Melting »),
- procédé de rechargement par dépôt laser ou LMD (pour « Laser Metal Déposition »),
- procédé de fabrication additive métallique par couches qui lie les particules par fusion à l'aide d'un faisceau d'électrons, encore appelé « Electron Beam Melting ».

A l'issue de la fabrication additive, on obtient un bord d'attaque qui présente déjà la forme (géométrie externe) et les dimensions finales souhaitées (pièce « net-shape »). On s'affranchit ainsi des opérations d'usinage et de polissages adaptatifs mécaniques de la paroi externe du bord d'attaque réalisées habituellement après réalisation par exemple par fonderie du bord d'attaques, opérations complexes en raison de la flexibilité de la pièce. Ces opérations de finition peuvent être ici remplacées par une opération de traitement de surface, comme par exemple une séquence de polissage électrochimique, qui n'impacte pas le dimensionnel du bord d'attaque.

On obtient alors un bord d'attaque fini ou clinquant 200 qui est prêt à être assemblé avec l'aube nue 10 comme illustré sur la figure 2. Le bord d'attaque 200 comprend une paroi interne 201 destinée à être collée sur la portion de bord avant 13a de l'aube nue 10 et une paroi externe 202 définissant le profil de bord d'attaque de l'aube finale. Le bord d'attaque 200 comporte en outre une portion de nez 203 à partir de laquelle s'étendent deux ailettes 204 et 205.

Conformément à l'invention, le bord d'attaque 200 comprend une première portion 210 réalisée en un premier matériau métallique. La première portion 210 s'étend depuis l'extrémité inférieure 206 du bord d'attaque et jusqu'à une position intermédiaire 207 située entre l'extrémité inférieure 206 et l'extrémité supérieure 208 du bord d'attaque. Le bord d'attaque 200 comprend en outre une deuxième portion 220 réalisée en un deuxième matériau métallique. La deuxième portion 220 s'étend depuis la position intermédiaire 207 et jusqu'à l'extrémité supérieure 208 du bord d'attaque. Grâce à la fabrication additive, il est possible de fabriquer un bord d'attaque avec plusieurs matériaux métalliques différents.

La première portion 210 s'étend suivant la direction longitudinale D_{L} sur une hauteur H₂₁₀ correspondant à environ 30% de la hauteur totale de veine (ou bord d'attaque) H_{TOT200} à partir de l'extrémité inférieure 206 du bord d'attaque. Par définition, la hauteur radiale minimale de veine ou de bord d'attaque égale 0% correspond au point d'intersection du bord d'attaque de l'aube avec un disque sur lequel elle est destinée à être montée, ce point d'intersection délimitant à l'intérieur la veine d'écoulement du flux d'air traversant la soufflante. De même, la hauteur radiale maximale de veine égale à 100% correspond au point de la ligne du bord d'attaque le plus élevé radialement.

La première portion 210 est destinée à s'étendre dans une zone ou hauteur de veine (ou de bord d'attaque) de l'aube où l'impact avec un corps étranger, en particulier un oiseau, n'est pas critique car il n'entraîne qu'une faible déformation du bord d'attaque. La première portion 210 peut donc être constituée avec un premier matériau métallique ayant une densité moyennement élevée.

La deuxième portion 220 s'étend suivant la direction longitudinale D_{L} sur une hauteur H₂₂₀ correspondant à 70% de la hauteur totale de veine H_{TOT200} à partir de la position intermédiaire 207. A l'inverse de la première portion 210, la deuxième portion 220 est destinée à s'étendre dans une zone ou hauteur de veine de l'aube où l'impact avec un corps étranger comme un oiseau est critique. A titre d'exemple, pour une aube de soufflante, l'ingestion d'oiseau de grande taille est critique à environ 50% de la hauteur totale de veine tandis que l'ingestion d'un oiseau de taille moyenne est critique à environ 85% de la hauteur totale de veine. La deuxième portion 220 est donc réalisée avec un deuxième matériau métallique d'une densité élevée supérieure à la densité du premier matériau métallique. A titre d'exemples non limitatifs :
- le premier matériau métallique peut être de l'acier ou du titane tandis que le deuxième matériau métallique est un alliage à base de nickel comme l'Inconel^{®} 718 ou un alliage à base de cobalt,
- le premier matériau métallique peut être du titane tandis que le deuxième matériau métallique est de l'acier.

La dernière étape du procédé de fabrication de l'aube consiste à coller le bord d'attaque métallique 200 sur l'aube nue en matériau composite 10. Plus précisément et comme illustré sur la figure 2, le bord d'attaque 200 est accosté sur la portion de bord avant 13a présent sur la partie de corps de pale 13 de l'aube nue 10 avec interposition d'une couche de colle ou matériau adhésif 40 entre la paroi interne 201 du bord d'attaque et la portion de bord avant 13a de l'aube nue 10. La couche de colle présente entre le bord d'attaque et la portion de bord avant de l'aube nue peut être réalisée de différentes façons. Elle peut notamment correspondre à un matériau adhésif placé en sandwich entre la paroi interne du bord d'attaque et la portion de bord avant de l'aube nue, le tout, une fois assemblé, étant placé dans un moule de collage qui est chauffé pour activer (polymériser) le pouvoir adhésif du matériau. Une couche de colle peut également être déposée directement sur la paroi interne 201 du bord d'attaque 200 et/ou sur la portion de bord avant 13a de l'aube nue, l'assemblage étant réalisé dans un moule de collage apte à exercer une pression sur les éléments à assembler et éventuellement à réaliser un traitement thermique de collage. Un procédé de collage d'un bord d'attaque sur un corps d'aube en matériau composite est notamment décrit dans le document US 2015/151485.

L'aube 30 ainsi réalisée présente une très bonne tenue à l'impact dans la zone à renforcer vis-à-vis de l'ingestion de corps étrangers sans pénaliser significativement la masse globale de l'aube grâce à la présence d'une portion de plus faible densité. On évite ainsi en outre d'augmenter les contraintes statiques générées par l'effort centrifuge au niveau de l'échasse qui correspond à une zone de concentration d'efforts dans la structure d'aube en matériau composite.

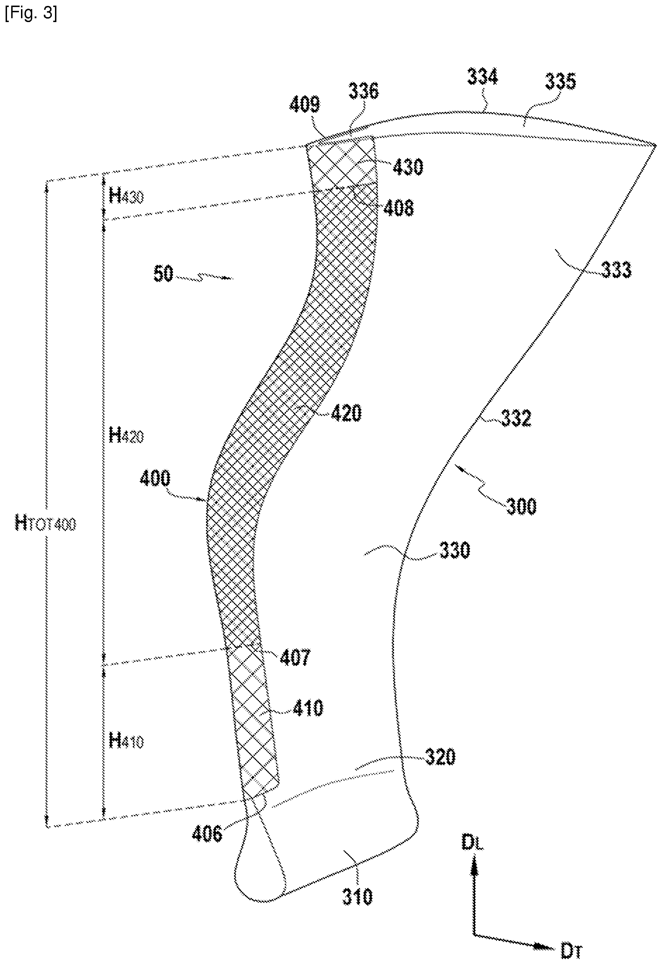

La figure 3 illustre une aube 50 qui diffère de l'aube 30 déjà décrite en ce que la zone sur laquelle s'étend la portion de matériau dense sur le bord d'attaque est réduite au niveau de l'extrémité supérieure du bord d'attaque. Plus précisément, l'aube 50 illustrée sur la figure 3 comprend une structure d'aube en matériau composite 300 comprenant suivant une direction longitudinale D_{L} un pied d'aube 310, une échasse 320 et un corps de pale 330 s'étendant suivant une direction transversale D_{T} entre un bord d'attaque 400 et un bord de fuite 332. Le corps de pale 330 comporte également une face intrados 333 et une face extrados 334 et un sommet 335. Le bord d'attaque 400 est constitué d'un clinquant en matériau métallique collé sur une portion de bord avant 336 du corps de pale 330. A l'exception du bord d'attaque 400, l'aube 50 est en matériau composite.

La fabrication de l'aube nue et du clinquant métallique rapporté sur l'aube nue pour former le bord de fuite de l'aube finale est identique à celle déjà décrite précédemment pour l'aube 30 et n'est pas décrit ici une nouvelle fois par souci de simplification. On notera simplement que le bord d'attaque comporte ici trois portions avec des densités différentes.

Conformément à l'invention, le bord d'attaque 400 comprend une première portion 410 réalisée en un premier matériau métallique. La première portion 410 s'étend depuis l'extrémité inférieure 406 du bord d'attaque et jusqu'à une première position intermédiaire 407 située entre l'extrémité inférieure 406 et l'extrémité supérieure 409 du bord d'attaque. Le bord d'attaque 400 comprend une deuxième portion 420 réalisée en un deuxième matériau métallique. La deuxième portion 420 s'étend depuis la première position intermédiaire 407 et jusqu'à une deuxième position intermédiaire 408 située entre l'extrémité inférieure 406 et l'extrémité supérieure 409 du bord d'attaque au-dessus de la première position intermédiaire suivant la direction longitudinale D_{L}. Le bord d'attaque 400 comprend en outre une troisième portion 430 réalisée en un troisième matériau métallique. La troisième portion 430 s'étend depuis la deuxième position intermédiaire 408 et jusqu'à l'extrémité supérieure 409 du bord d'attaque 400. Grâce à la fabrication additive, il est possible de fabriquer un bord d'attaque avec plusieurs matériaux métalliques différents.

La première portion 410 s'étend suivant la direction longitudinale D_{L} sur une hauteur H₄₁₀ correspondant à environ 30% de la hauteur totale de veine H_{TOT400} à partir de l'extrémité inférieure 406 du bord d'attaque. La troisième portion 430 s'étend sur une hauteur H₄₃₀ correspondant à environ 10% de la hauteur totale de veine H_{TOT400} à partir de la deuxième position intermédiaire 408.Les première et deuxième portions sont destinées à s'étendre dans une zone ou hauteur du bord d'attaque de l'aube où l'impact avec un corps étranger, en particulier un oiseau, n'est pas critique. Les première et troisième portions 410 et 430 peuvent donc être constituées avec respectivement des premier et troisième matériaux métalliques ayant une densité moyennement élevée. Les premier et troisième matériaux métalliques peuvent être identiques ou différents.

La deuxième portion 420 s'étend suivant la direction longitudinale D_{L} sur une hauteur H₄₂₀ correspondant à 60% de la hauteur totale de veine H_{TOT400} à partir de la première position intermédiaire 407. A l'inverse des première et deuxième portions 410 et 430, la deuxième portion 420 est destinée à s'étendre dans une zone ou hauteur de veine où l'impact avec un corps étranger comme un oiseau est critique. La deuxième portion 220 est donc réalisée avec un deuxième matériau métallique d'une densité élevée supérieure à la densité du premier matériau et du troisième matériau. A titre d'exemples non limitatifs :
- les premier et troisième matériaux métalliques peuvent être de l'acier ou du titane tandis que le deuxième matériau métallique est un alliage à base de nickel comme l'Inconel^{®} 718 ou un alliage à base de cobalt,
- les premier et troisième matériaux métalliques peuvent être du titane tandis que le deuxième matériau métallique est de l'acier.

Ce mode de réalisation permet d'alléger encore la masse globale de l'aube grâce à la présence de deux portions de plus faible densité.

## Revendications

1. Procédé de fabrication d'une aube en matériau composite (30) à bord d'attaque métallique rapporté (200) pour moteur aéronautique à turbine à gaz, le procédé comprenant :
- réalisation d'une aube nue en matériau composite (10) comprenant suivant une direction longitudinale (D_{L}) une partie de pied d'aube (11), une partie d'échasse (12) et une partie de corps de pale (13), la partie de corps de pale s'étendant suivant la direction longitudinale entre la partie d'échasse et un sommet de corps de pale (15) et suivant une direction s'étendant entre une portion de bord avant (13a) et une portion de bord arrière (14),
- fabrication par fabrication additive d'un bord d'attaque (200) s'étendant suivant la direction longitudinale entre une extrémité inférieure (206) destinée à être présente au niveau de la partie d'échasse (12) de l'aube nue en matériau composite (10) et une extrémité supérieure (208) destinée à être présente au niveau du sommet (15) de la partie de corps de pale (13),
- collage du bord d'attaque fabriqué (200) sur la portion de bord avant (13a) du corps de pale de l'aube nue en matériau composite (10), **caractérisé en ce que** le bord d'attaque (200) comprend une première portion (210) réalisée en un premier matériau métallique et s'étendant depuis l'extrémité inférieure (206) du bord d'attaque et jusqu'à une position intermédiaire (207) située entre l'extrémité inférieure (206) et l'extrémité supérieure (208) du bord d'attaque et une deuxième portion (220) réalisée en un deuxième matériau métallique et s'étendant depuis la position intermédiaire (207) et jusqu'à l'extrémité supérieure (208) dudit bord d'attaque, le deuxième matériau métallique présentant une densité supérieure à la densité du premier matériau métallique.

2. Procédé selon la revendication 1, dans lequel la première portion (210) s'étend suivant la direction longitudinale (D_{L}) sur une hauteur (H₂₁₀) correspondant à 30% de la hauteur totale de veine (H_{TOT200}) (200) tandis que la deuxième portion (220) s'étend suivant la direction longitudinale sur une hauteur (H₂₂₀) correspondant à 70% de la hauteur totale de veine (H_{TOT200}).

3. Procédé selon la revendication 1 ou 2, dans lequel le premier matériau métallique est de l'acier ou du titane tandis que le deuxième matériau métallique est un alliage à base de nickel ou cobalt.

4. Procédé selon l'une quelconque des revendications 1 ou 2, dans lequel le premier matériau métallique est du titane tandis que le deuxième matériau métallique est de l'acier.

5. Procédé de fabrication d'une aube en matériau composite (40) à bord d'attaque métallique rapporté (400) pour moteur aéronautique à turbine à gaz, le procédé comprenant :
- réalisation d'une aube nue en matériau composite (10) comprenant suivant une direction longitudinale (D_{L}) une partie de pied d'aube (11), une partie d'échasse (12) et une partie de corps de pale (13), la partie de corps de pale s'étendant suivant la direction longitudinale entre la partie d'échasse et un sommet de corps de pale (15) et suivant une direction s'étendant entre une portion de bord avant (13a) et une portion de bord arrière (14),
- fabrication par fabrication additive d'un bord d'attaque (400) s'étendant suivant la direction longitudinale entre une extrémité inférieure (406) destinée à être présente au niveau de la partie d'échasse de l'aube nue en matériau composite et une extrémité supérieure (408) destinée à être présente au niveau du sommet de la partie de corps de pale,
- collage du bord d'attaque fabriqué (400) sur la portion de bord avant du corps de pale de l'aube nue en matériau composite,
**caractérisé en ce que** le bord d'attaque (400) comprend une première portion (410) réalisée en un premier matériau métallique et s'étendant depuis l'extrémité inférieure (406) du bord d'attaque et jusqu'à une première position intermédiaire (407) située entre l'extrémité inférieure (406) et l'extrémité supérieure (409) du bord d'attaque, une deuxième portion (420) réalisée en un deuxième matériau métallique et s'étendant depuis la première position intermédiaire (407) et jusqu'à une deuxième position intermédiaire (408), et une troisième portion (430) réalisée en un troisième matériau métallique et s'étendant depuis la deuxième position intermédiaire (408) et jusqu'à l'extrémité supérieure (409) dudit bord d'attaque, le deuxième matériau métallique présentant une densité supérieure à la densité des premier et troisième matériaux métalliques.

6. Procédé selon la revendication 5, dans lequel la première portion (410) s'étend suivant la direction longitudinale (DL) sur une hauteur (H₄₁₀) correspondant à 30% de la hauteur totale de veine (H_{TOT400}) tandis que la deuxième portion (420) s'étend suivant la direction longitudinale sur une hauteur (H₄₂₀) correspondant à 60% de la hauteur totale de veine (H_{TOT400}) et la troisième portion (430) s'étend suivant la direction longitudinale sur une hauteur (H₄₃₀) correspondant à 10% de la hauteur totale de veine (H_{TOT400}).

7. Procédé selon la revendication 5 ou 6, dans lequel les premier et troisième matériaux métalliques sont de l'acier ou du titane tandis que le deuxième matériau métallique est un alliage à base de nickel ou cobalt.

8. Procédé selon l'une quelconque des revendications 5 ou 6, dans lequel les premier et troisième matériaux métalliques sont du titane tandis que le deuxième matériau métallique est de l'acier.

9. Aube en matériau composite (30) à bord d'attaque (200) métallique rapporté pour moteur aéronautique à turbine à gaz, l'aube comprenant une structure d'aube en matériau composite (100) comprenant suivant une direction longitudinale (D_{L}) un pied d'aube (110), une échasse (120) et un corps de pale (130), le corps de pale s'étendant suivant la direction longitudinale entre l'échasse (120) et un sommet d'aube (135) et suivant une direction s'étendant entre une portion de bord avant (136) et un bord arrière (132), et un bord d'attaque (200) collé sur la portion de bord avant du corps de pale de la structure d'aube en matériau composite, le bord d'attaque s'étendant suivant la direction longitudinale entre une extrémité inférieure (206) présente au niveau de l'échasse (120) de la structure d'aube en matériau composite (100) et une extrémité supérieure (208) présente au niveau du sommet d'aube (135) de ladite structure d'aube, **caractérisée en ce que** le bord d'attaque (200) comprend une première portion (210) réalisée en un premier matériau métallique et s'étendant depuis l'extrémité inférieure (206) du bord d'attaque et jusqu'à une position intermédiaire (207) située entre l'extrémité inférieure (206) et l'extrémité supérieure (208) du bord d'attaque et une deuxième portion (220) réalisée en un deuxième matériau métallique et s'étendant depuis la position intermédiaire (207) et jusqu'à l'extrémité supérieure (208) dudit bord d'attaque, le deuxième matériau métallique présentant une densité supérieure à la densité du premier matériau métallique.

10. Aube selon la revendication 9, dans laquelle la première portion (210) s'étend suivant la direction longitudinale (D_{L}) sur une hauteur (H₂₁₀) correspondant à 30% de la hauteur totale de veine (H_{TOT200}) tandis que la deuxième portion (220) s'étend suivant la direction longitudinale sur une hauteur (H₂₂₀) correspondant à 70% de la hauteur totale de veine (H_{TOT200}).

11. Aube en matériau composite (50) à bord d'attaque (400) métallique rapporté pour moteur aéronautique à turbine à gaz, l'aube comprenant une structure d'aube en matériau composite (300) comprenant suivant une direction longitudinale (D_{L}) un pied d'aube (310), une échasse (320) et un corps de pale (330), le corps de pale s'étendant suivant la direction longitudinale entre l'échasse (320) et un sommet d'aube (335) et suivant une direction s'étendant entre une portion de bord avant (336) et un bord arrière (332), et un bord d'attaque (400) collé sur la portion de bord avant du corps de pale de la structure d'aube en matériau composite, le bord d'attaque s'étendant suivant la direction longitudinale entre une extrémité inférieure (406) présente au niveau de l'échasse (320) de la structure d'aube en matériau composite (300) et une extrémité supérieure (408) présente au niveau du sommet d'aube (335) de ladite structure d'aube, **caractérisée en ce que** le bord d'attaque (400) comprend une première portion (410) réalisée en un premier matériau métallique et s'étendant depuis l'extrémité inférieure (406) du bord d'attaque et jusqu'à une première position intermédiaire (407) située entre l'extrémité inférieure (406) et l'extrémité supérieure (409) du bord d'attaque, une deuxième portion (420) réalisée en un deuxième matériau métallique et s'étendant depuis la première position intermédiaire (407) et jusqu'à une deuxième position intermédiaire (408), et une troisième portion (430) réalisée en un troisième matériau métallique et s'étendant depuis la deuxième position intermédiaire (408) et jusqu'à l'extrémité supérieure (409) dudit bord d'attaque, le deuxième matériau métallique présentant une densité supérieure à la densité des premier et troisième matériaux métalliques.

12. Aube selon la revendication 11, dans laquelle la première portion (410) s'étend suivant la direction longitudinale (DL) sur une hauteur (H₄₁₀) correspondant à 30% de la hauteur totale de veine (H_{TOT400}) tandis que la deuxième portion (420) s'étend suivant la direction longitudinale sur une hauteur (H₄₂₀) correspondant à 60% de la hauteur totale de veine (H_{TOT400}) et la troisième portion (430) s'étend suivant la direction longitudinale sur une hauteur (H₄₃₀) correspondant à 10% de la hauteur totale de veine (H_{TOT400}).

## Patentansprüche

1. Verfahren zur Herstellung einer Schaufel aus Verbundmaterial (30) mit einer aufgesetzten metallischen Vorderkante (200) für einen Gasturbinen-Luftfahrzeugmotor, wobei das Verfahren umfasst:
- Verwirklichung einer unbesetzten Schaufel aus Verbundmaterial (10), die einer Längsrichtung (D_{L}) folgend einen Schaufelfußteil (11), einen Stelzenteil (12) und einen Blattkörperteil (13) umfasst, wobei sich der Blattkörperteil der Längsrichtung folgend zwischen dem Stelzenteil und einer Spitze des Blattkörpers (15) und einer Richtung folgend erstreckt, die sich zwischen einem vorderen Randabschnitt (13a) und einem hinteren Randabschnitt (14) erstreckt,
- Fertigung einer Vorderkante (200), die sich der Längsrichtung folgend zwischen einem unteren Ende (206), das dazu bestimmt ist, auf Höhe des Stelzenteils (12) der unbesetzten Schaufel aus Verbundmaterial (10) vorzuliegen, und einem oberen Ende (208) erstreckt, das dazu bestimmt ist, auf Höhe der Spitze (15) des Blattkörperteils (13) vorzuliegen, durch additive Fertigung,
- Ankleben der gefertigten Vorderkante (200) an den vorderen Randabschnitt (13a) des Blattkörpers der unbesetzten Schaufel aus Verbundmaterial (10), **dadurch gekennzeichnet, dass** die Vorderkante (200) einen ersten Abschnitt (210), der aus einem ersten Metallmaterial verwirklicht ist und sich von dem unteren Ende (206) der Vorderkante und bis zu einer Zwischenposition (207) erstreckt, die sich zwischen dem unteren Ende (206) und dem oberen Ende (208) der Vorderkante befindet, und einen zweiten Abschnitt (220) umfasst, der aus einem zweiten Metallmaterial verwirklicht ist und sich von der Zwischenposition (207) und bis zu dem oberen Ende (208) der Vorderkante erstreckt, wobei das zweite Metallmaterial eine Dichte aufweist, die höher ist als die Dichte des ersten Metallmaterials.

2. Verfahren nach Anspruch 1, wobei der erste Abschnitt (210) sich der Längsrichtung (D_{L}) folgend auf einer Höhe (H₂₁₀) erstreckt, die 30 % der Gesamthöhe des Strömungsgangs (H_{TOT200}) (200) entspricht, während der zweite Abschnitt (220) sich der Längsrichtung folgend auf einer Höhe (H₂₂₀) erstreckt, die 70 % der Gesamthöhe des Strömungsgangs (H_{TOT200}) entspricht.

3. Verfahren nach Anspruch 1 oder 2, wobei das erste Metallmaterial Stahl oder Titan ist, während das zweite Metallmaterial eine Legierung auf Basis von Nickel oder Kobalt ist.

4. Verfahren nach einem der Ansprüche 1 oder 2, wobei das erste Metallmaterial Titan ist, während das zweite Metallmaterial Stahl ist.

5. Verfahren zur Herstellung einer Schaufel aus Verbundmaterial (40) mit einer aufgesetzten metallischen Vorderkante (400) für einen Gasturbinen-Luftfahrzeugmotor, wobei das Verfahren umfasst:
- Verwirklichung einer unbesetzten Schaufel aus Verbundmaterial (10), die einer Längsrichtung (D_{L}) folgend einen Schaufelfußteil (11), einen Stelzenteil (12) und einen Blattkörperteil (13) umfasst, wobei sich der Blattkörperteil der Längsrichtung folgend zwischen dem Stelzenteil und einer Spitze des Blattkörpers (15) und einer Richtung folgend erstreckt, die sich zwischen einem vorderen Randabschnitt (13a) und einem hinteren Randabschnitt (14) erstreckt,
- Fertigung einer Vorderkante (400), die sich der Längsrichtung folgend zwischen einem unteren Ende (406), das dazu bestimmt ist, auf Höhe des Stelzenteils der unbesetzten Schaufel aus Verbundmaterial vorzuliegen, und einem oberen Ende (408) erstreckt, das dazu bestimmt ist, auf Höhe der Spitze des Blattkörperteils vorzuliegen, durch additive Fertigung,
- Ankleben der gefertigten Vorderkante (400) an den vorderen Randabschnitt des Blattkörpers der unbesetzten Schaufel aus Verbundmaterial,
**dadurch gekennzeichnet, dass** die Vorderkante (400) einen ersten Abschnitt (410), der aus einem ersten Metallmaterial verwirklicht ist und sich von dem unteren Ende (406) der Vorderkante und bis zu einer ersten Zwischenposition (407) erstreckt, die sich zwischen dem unteren Ende (406) und dem oberen Ende (409) der Vorderkante befindet, einen zweiten Abschnitt (420), der aus einem zweiten Metallmaterial verwirklicht ist und sich von der ersten Zwischenposition (407) und bis zu einer zweiten Zwischenposition (408) erstreckt, und einen dritten Abschnitt (430) umfasst, der aus einem dritten Metallmaterial verwirklicht ist und sich von der zweiten Zwischenposition (408) und bis zu dem oberen Ende (409) der Vorderkante erstreckt, wobei das zweite Metallmaterial eine Dichte aufweist, die höher als die Dichte des ersten und des dritten Metallmaterials ist.

6. Verfahren nach Anspruch 5, wobei der erste Abschnitt (410) sich der Längsrichtung (D_{L}) folgend auf einer Höhe (H₄₁₀) erstreckt, die 30 % der Gesamthöhe des Strömungsgangs (H_{T0T400}) entspricht, während der zweite Abschnitt (420) sich der Längsrichtung folgend auf einer Höhe (H₄₂₀) erstreckt, die 60 % der Gesamthöhe des Strömungsgangs (H_{T0T400}) entspricht, und der dritte Abschnitt (430) sich der Längsrichtung folgend auf einer Höhe (H₄₃₀) erstreckt, die 10 % der Gesamthöhe des Strömungsgangs (H_{T0T400}) entspricht.

7. Verfahren nach Anspruch 5 oder 6, wobei das erste und das dritte Metallmaterial Stahl oder Titan sind, während das zweite Metallmaterial eine Legierung auf Basis von Nickel oder Kobalt ist.

8. Verfahren nach einem der Ansprüche 5 oder 6, wobei das erste und das dritte Metallmaterial Titan sind, während das zweite Metallmaterial Stahl ist.

9. Schaufel aus Verbundmaterial (30) mit einer aufgesetzten metallischen Vorderkante (200) für einen Gasturbinen-Luftfahrzeugmotor, wobei die Schaufel eine Schaufelstruktur aus Verbundmaterial (100) umfasst, die einer Längsrichtung (D_{L}) folgend einen Schaufelfuß (110), eine Stelze (120) und einen Blattkörper (130), wobei sich der Blattkörper der Längsrichtung folgend zwischen der Stelze (120) und einer Schaufelspitze (135) und einer Richtung folgend erstreckt, die sich zwischen einem vorderen Randabschnitt (136) und einem hinteren Rand (132) erstreckt, und eine Vorderkante (200) umfasst, die an den vorderen Randabschnitt des Blattkörpers der Schaufelstruktur aus Verbundmaterial angeklebt ist, wobei sich die Vorderkante der Längsrichtung folgend zwischen einem unteren Ende (206), das auf Höhe der Stelze (120) der Schaufelstruktur aus Verbundmaterial (100) vorliegt, und einem oberen Ende (208) erstreckt, das auf Höhe der Schaufelspitze (135) der Schaufelstruktur vorliegt, **dadurch gekennzeichnet, dass** die Vorderkante (200) einen ersten Abschnitt (210), der aus einem ersten Metallmaterial verwirklicht ist und sich von dem unteren Ende (206) der Vorderkante und bis zu einer Zwischenposition (207) erstreckt, die sich zwischen dem unteren Ende (206) und dem oberen Ende (208) der Vorderkante befindet, und einen zweiten Abschnitt (220) umfasst, der aus einem zweiten Metallmaterial verwirklicht ist und sich von der Zwischenposition (207) und bis zu dem oberen Ende (208) der Vorderkante erstreckt, wobei das zweite Metallmaterial eine Dichte aufweist, die höher ist als die Dichte des ersten Metallmaterials.

10. Schaufel nach Anspruch 9, wobei der erste Abschnitt (210) sich der Längsrichtung (D_{L}) folgend auf einer Höhe (H₂₁₀) erstreckt, die 30 % der Gesamthöhe des Strömungsgangs (H_{TOT200}) entspricht, während der zweite Abschnitt (220) sich der Längsrichtung folgend auf einer Höhe (H₂₂₀) erstreckt, die 70 % der Gesamthöhe des Strömungsgangs (H_{TOT200}) entspricht.

11. Schaufel aus Verbundmaterial (50) mit einer aufgesetzten metallischen Vorderkante (400) für einen Gasturbinen-Luftfahrzeugmotor, wobei die Schaufel eine Schaufelstruktur aus Verbundmaterial (300) umfasst, die einer Längsrichtung (D_{L}) folgend einen Schaufelfuß (310), eine Stelze (320) und einen Blattkörper (330), wobei sich der Blattkörper der Längsrichtung folgend zwischen der Stelze (320) und einer Schaufelspitze (335) und einer Richtung folgend erstreckt, die sich zwischen einem vorderen Randabschnitt (336) und einem hinteren Rand(332) erstreckt, und eine Vorderkante (400) umfasst, die an den vorderen Randabschnitt des Blattkörpers der Schaufelstruktur aus Verbundmaterial angeklebt ist, wobei sich die Vorderkante der Längsrichtung folgend zwischen einem unteren Ende (406), das auf Höhe der Stelze (320) der Schaufelstruktur aus Verbundmaterial (300) vorliegt, und einem oberen Ende (408) erstreckt, das auf Höhe der Schaufelspitze (335) der Schaufelstruktur vorliegt, **dadurch gekennzeichnet, dass** die Vorderkante (400) einen ersten Abschnitt (410), der aus einem ersten Metallmaterial verwirklicht ist und sich von dem unteren Ende (406) der Vorderkante und bis zu einer ersten Zwischenposition (407) erstreckt, die sich zwischen dem unteren Ende (406) und dem oberen Ende (409) der Vorderkante befindet, einen zweiten Abschnitt (420), der aus einem zweiten Metallmaterial verwirklicht ist und sich von der ersten Zwischenposition (407) und bis zu einer zweiten Zwischenposition (408) erstreckt, und einen dritten Abschnitt (430) umfasst, der aus einem dritten Metallmaterial verwirklicht ist und sich von der zweiten Zwischenposition (408) und bis zu dem oberen Ende (409) der Vorderkante erstreckt, wobei das zweite Metallmaterial eine Dichte aufweist, die höher als die Dichte des ersten und des dritten Metallmaterials ist.

12. Schaufel nach Anspruch 11, wobei der erste Abschnitt (410) sich der Längsrichtung (D_{L}) folgend auf einer Höhe (H₄₁₀) erstreckt, die 30 % der Gesamthöhe des Strömungsgangs (H_{T0T400}) entspricht, während der zweite Abschnitt (420) sich der Längsrichtung folgend auf einer Höhe (H₄₂₀) erstreckt, die 60 % der Gesamthöhe des Strömungsgangs (H_{T0T400}) entspricht, und der dritte Abschnitt (430) sich der Längsrichtung folgend auf einer Höhe (H₄₃₀) erstreckt, die 10 % der Gesamthöhe des Strömungsgangs (H_{T0T400}) entspricht.

## Claims

1. A method for manufacturing a blade in composite material (30) having an added metal leading edge (200) for gas turbine aeroengine, the method comprising:
- producing a blade body in composite material (10) comprising in longitudinal direction (D_{L}) a blade root part (11), a shank part (12) and an airfoil body part (13), the airfoil body part extending in longitudinal direction between the shank part and an airfoil body tip (15) and in transverse direction (D_{T}) between a foremost edge portion (13a) and a rear edge portion (14),
- manufacturing, via additive manufacturing, a leading edge (200) extending in the longitudinal direction between a lower end (206) intended to be present at the shank part (12) of the blade body in composite material (10) and an upper end (208) intended to be present at the tip (15) of the airfoil body part (13),
- bonding the manufactured leading edge (200) onto the foremost edge portion (13a) of the airfoil body of the blade body in composite material (10), **characterized in that** the leading edge (200) comprises a first portion (210) in a first metal material and extending from the lower end (206) of the leading edge as far as an intermediate position (207) located between the lower end (206) and upper end (208) of the leading edge, and a second portion (220) in a second metal material extending from the intermediate position (207) as far as the upper end (208) of said leading edge, the second metal material having greater density than the density of the first metal material.

2. The method according to claim 1, wherein the first portion (210) extends in longitudinal direction (D_{L}) over a height (H₂₁₀) corresponding to 30% of total airflow height (H_{TOT200}) (200) while the second portion (220) extends in longitudinal direction over a height (H₂₂₀) corresponding to 70% of total airflow height (H_{TOT200}).

3. The method according to claim 1 or 2, wherein the first metal material is steel or titanium, while the second metal material is a nickel or cobalt alloy.

4. The method according to any of claims 1 or 2, wherein the first metal material is titanium while the second metal material is steel.

5. A method for manufacturing a blade in composite material (40) having an added metal leading edge (400) for gas turbine aeroengine, the method comprising:
- producing a blade body in composite material (10) comprising in longitudinal direction (D_{L}) a blade root part (11), a shank part (12) and an airfoil body part (13), the airfoil body part extending in longitudinal direction between the shank part and an airfoil body tip (15) and in transverse direction (D_{T}) between a foremost edge portion (13a) and rear edge portion (14),
- manufacturing, via additive manufacturing, a leading edge (400) extending in longitudinal direction between a lower end (406) intended to be present at the shank part of the blade body in composite material and an upper end (408) intended to be present at the tip of the airfoil body part,
- bonding the manufactured leading edge (400) onto the foremost edge portion of the airfoil body of the blade body in composite material, **characterized in that** the leading edge (400) comprises a first portion (410) in a first metal material and extending from the lower end (406) of the leading edge as far as a first intermediate position (407) located between the lower end (406) and upper end (409) of the leading edge, a second portion (420) in a second metal material and extending from the first intermediate position (407) as far as a second intermediate position (408), and a third portion (430) in a third metal material and extending from the second intermediate position (408) as far as the upper end (409) of said leading edge, the second metal material having greater density than the density of the first and third metal materials.

6. The method according to claim 5, wherein the first portion (410) extends in longitudinal direction (D_{L}) over a height (H₄₁₀) corresponding to 30% of total airflow height (H_{TOT400}) while the second portion (420) extends in longitudinal direction over a height (H₄₂₀) corresponding to 60% of total airflow height (H_{TOT400}) and the third portion (430) extends in longitudinal direction over a height (H₄₃₀) corresponding to 10% of total airflow height (H_{TOT400}).

7. The method according to claim 5 or 6, wherein the first and third metal materials are steel or titanium, while the second metal material is a nickel or cobalt alloy.

8. The method according to any of claims 5 or 6, wherein the first and third metal materials are titanium while the second metal material is steel.

9. A blade in composite material (30) having an added metal leading edge (200) for gas turbine aeroengine, the blade comprising a blade structure in composite material (100) comprising in longitudinal direction (D_{L}) a blade root (110), a shank (120) and an airfoil body (130), the airfoil body extending in longitudinal direction between the shank (120) and a blade tip (135) and in transverse direction (D_{T}) between a foremost edge portion (136) and rear edge (132), and a leading edge (200) bonded onto the foremost edge portion of the airfoil body of the blade structure in composite material, the leading edge extending in longitudinal direction between a lower end (206) present at the shank (120) of the blade structure in composite material (100) and an upper end (208) present at the blade tip (135) of said blade structure, **characterized in that** the leading edge (200) comprises a first portion (210) in a first metal material and extending from the lower end (206) of the leading edge as far as an intermediate position (207) located between the lower end (206) and upper end (208) of the leading edge, and a second portion (220) in a second metal material and extending from the intermediate position (207) as far as the upper end (208) of said leading edge, the second metal material having greater density than the density of the first metal material.

10. The blade according to claim 9, wherein the first portion (210) extends in longitudinal direction (D_{L}) over a height (H₂₁₀) corresponding to 30% of total airflow height (H_{TOT200}) while the second portion (220) extends in longitudinal direction over a height (H₂₂₀) corresponding to 70% of total airflow height (H_{TOT200}).

11. A blade in composite material (50) having an added metal leading edge (400) for gas turbine aeroengine, the blade comprising a blade structure in composite material (300) comprising in longitudinal direction (D_{L}), a blade root (310), a shank (320) and an airfoil body (330), the airfoil body extending in longitudinal direction between the shank (320) and a blade tip (335) and in transverse direction (D_{T}) between a foremost edge portion (336) and rear edge (332), and a leading edge (400) bonded onto the foremost edge portion of the airfoil body of the blade structure in composite material, the leading edge extending in longitudinal direction between a lower end (406) present at the shank (320) of the blade structure in composite material (300) and an upper end (408) present at the blade tip (335) of said blade structure, **characterized in that** the leading edge (400) comprises a first portion (410) in a first metal material and extending from the lower end (406) of the leading edge as far as a first intermediate position (407) located between the lower end (406) and upper end (409) of the leading edge, a second portion (420) in a second metal material and extending from the first intermediate position (407) as far as a second intermediate position (408), and a third portion (430) in a third metal material and extending from the second intermediate position (408) as far as the upper end (409) of said leading edge, the second metal material having greater density than the density of the first and third metal materials.

12. The blade according to claim 11, wherein the first portion (410) extends in longitudinal direction (DL) over a height (H₄₁₀) corresponding to 30% of total airflow height (H_{TOT400}), while the second portion (420) extends in longitudinal direction over a height (H₄₂₀) corresponding to 60% of total airflow height (H_{TOT400}), and the third portion (430) extends in longitudinal direction over a height (H₄₃₀) corresponding to 10% of total airflow height (H_{TOT400}).
